# EUROPEAN PATENT APPLICATION

(11) **EP 4 461 864 A1**
(43) Date of publication of application: **13.11.2024**
(21) Application number: 23737394.9
(22) Date of filing: 05.01.2023
(51) Int. Cl.: D06F 34/05, D06F 34/10, D06F 34/30, D06F 34/32, D06F 34/34, D06F 31/00, H04W 4/30, H04W 4/80, H04W 88/02, D06F 105/58

(54) **CLOTHES TREATMENT APPARATUS**

(30) Priority: 05.01.2022 KR 20220001412
(71) Applicant: LG Electronics Inc., Yeongdeungpo-gu Seoul 07336 (KR)
(72) Inventor: HWANG, Jeongwon, Seoul 08592 (KR); SEO, Sangwoog, Seoul 08592 (KR); KIM, Jinwoo, Seoul 08592 (KR)
(74) Representative: Vossius & Partner Patentanwälte Rechtsanwälte mbB
(86) International application number: PCT/KR2023/000197
(87) International publication number: WO 2023/132646

(57) **Abstract**

A clothes treatment apparatus is disclosed, and the clothes treatment apparatus according to one embodiment of the present invention comprises: a cabinet; a drum, which can rotate inside the cabinet and accommodates clothes; and a control unit, which is provided inside the cabinet and has a plurality of treatment courses for treating the clothes, wherein the plurality of treatment courses include conventional courses preset in the control unit, and further include a user course, created in addition to the conventional courses, that allows a user to set options.

## Description

### [Technical Field]

The present disclosure relates to a laundry treating apparatus, and more particularly, relates to a laundry treating apparatus for treating laundry.

### [Background]

A laundry treating apparatus is an apparatus that may perform various treatment courses to treat laundry, such as a washing course that puts clothes, bedding, and the like (hereinafter, referred to as laundry) into a drum and removes contaminants from the laundry, a drying course to remove moisture present in the laundry, and the like.

The laundry treating apparatus may include a cabinet that forms an outer appearance thereof, and may include the drum disposed inside the cabinet to accommodate the laundry therein. Additionally, when water is used in the treatment course of the laundry, a tub may be disposed inside the cabinet, and the drum may be installed inside the tub.

The laundry treating apparatuses may be categorized into a top loading type and a front loading type based on a scheme of putting the laundry into the drum. The top loading type may put the laundry via a top surface of the cabinet, and the front loading type may put the laundry via a front surface of the cabinet.

Korean Patent Application Publication No. 10-2014-0023986 discloses a laundry treating apparatus including a display and a search unit for providing a plurality of treatment courses to a user.

The user may perform a desired treatment process of the laundry by changing a plurality of laundry treatment courses and options corresponding thereto preset in the laundry treating apparatus.

However, the laundry treating apparatus may be disadvantageous in terms of ease of use because the laundry treatment course provided to the user is predetermined and stored in a controller or the like, and therefore, does not reflect a tendency or a preference of the user.

In addition, because a setting value of each option for the laundry treatment course is predetermined, the user should change the setting value of the option to a desired value each time when using the laundry treating apparatus, which may cause inconvenience.

Therefore, it is an important task in the present technical field to provide a flexible laundry treatment course that may meet various needs of the user, and further to provide the setting value of the option for the laundry treatment course based on the tendency and the preference of the user.

### [Summary]

### [Technical Problem]

Embodiments of the present disclosure are to provide a laundry treating apparatus that may effectively improve user convenience in a treatment process of laundry.

Additionally, embodiments of the present disclosure are to provide a laundry treating apparatus that may provide various treatment courses for treating laundry.

Additionally, embodiments of the present disclosure are to provide a laundry treating apparatus that may provide a flexible treatment course that meets needs of a user.

Additionally, embodiments of the present disclosure are to provide a laundry treating apparatus that may reflect user's needs in setting an option for a treatment course.

### [Technical Solutions]

A laundry treating apparatus according to an embodiment of the present disclosure may store a plurality of treatment courses for treating laundry in a controller and provide them to a user. Additionally, the plurality of treatment courses may include an existing course stored in advance in the controller and an additional course additionally stored by the user.

In one example, the plurality of treatment courses may include a treatment course edited by the user. In other words, in addition to the existing course, the user course that user edits and saves may be stored in the controller.

Additionally, in an embodiment of the present disclosure, there is an option that may be adjusted by the user for the plurality of treatment courses, and the option is set such that a stored value stored in advance in the controller is reflected as an initial setting value.

However, when a preferred value of the option preferred by the user is generated, the controller may store the preferred value and reflect the preferred value as a setting value of the option for each of the plurality of treatment courses, instead of the stored value.

A laundry treating apparatus according to an embodiment of the present disclosure as above includes a cabinet, a drum, and a controller. The drum is rotatably disposed inside the cabinet, and accommodates laundry therein.

The controller is disposed inside the cabinet and stores a plurality of treatment courses for treating the laundry. The plurality of treatment courses include an existing course preset in the controller, and further include a user course additionally stored in addition to the existing course as a user sets an option.

The user course may remain as part of the plurality of treatment courses even after the controller is powered off and then powered on again.

The cabinet may be equipped with an output device that outputs a screen to the user, the output device may output a course selection screen where one of the plurality of treatment courses is selected, and the user course may be displayed on the course selection screen as the one of the plurality of treatment courses along with the existing course.

The user course may be created to have the option set via an input device disposed on the cabinet or a user's terminal.

A user course setting screen for creating the user course may be provided to an output device that is disposed on the cabinet and outputs a screen or a user's terminal.

The user course may be created as a new course distinct from the existing course by changing a setting value of the option from the existing course.

The existing course may include a plurality of existing courses set in the controller, and the user course may be created as the new course with the changed setting value of the option by the user from one of the plurality of existing courses selected by the user.

An additional course additionally created by the user in addition to the existing course may be stored as part of the plurality of treatment courses in the controller, and the user course may correspond to the additional course.

The additional course may be deleted from the controller by the user. An additional course recommendation screen providing the additional course additionally creatable in the controller may be output from an output device that is disposed in the cabinet and outputs a screen or a user's terminal, and the controller may store the additional course selected by the user on the additional course recommendation screen as part of the plurality of treatment courses.

The controller may perform a course selection process of selecting one of the plurality of treatment courses as a selected course by the user, and in the course selection process, a setting value of the option for the selected course may be changeable by the user.

The controller may store a setting value repeatedly set by the user a certain number of times or more for the option of the selected course in past course selection processes as a preferred value, and reflect the preferred value as the setting value of the option for the selected course during a current course selection process.

The controller may reflect the preferred value as the setting value when the preferred value exists for the option of the selected course, and reflect a stored value stored in advance in the controller as the setting value when the preferred value does not exist.

The controller may store a setting value repeatedly set by the user in succession a certain number of times or more in the past course selection processes as the preferred value.

A preferred value reflection function of reflecting the preferred value as the setting value may be releasable by an input device that is disposed in the cabinet and allows a user's command to be input or a user's terminal.

### [Advantageous Effects]

The embodiments of the present disclosure may provide the laundry treating apparatus that may effectively improve the user convenience in the treatment process of the laundry.

Additionally, the embodiments of the present disclosure may provide the laundry treating apparatus that may provide the various treatment courses for treating the laundry.

Additionally, the embodiments of the present disclosure may provide the laundry treating apparatus that may provide the flexible treatment course that meets the needs of the user.

Additionally, the embodiments of the present disclosure may provide the laundry treating apparatus that may reflect the user's needs in setting the option for the treatment course.

### [Brief Description of the Drawings]

FIG. 1 is a perspective view showing a laundry treating apparatus according to an embodiment of the present disclosure.
FIG. 2 is a diagram showing a manipulation unit disposed on a laundry treating apparatus according to an embodiment of the present disclosure.
FIG. 3 is a cross-sectional view showing the interior of a laundry treating apparatus including a tub according to an embodiment of the present disclosure.
FIG. 4 is a cross-sectional view showing the interior of a laundry treating apparatus with a tub omitted according to an embodiment of the present disclosure.
FIG. 5 is a diagram schematically showing a communication relationship of a laundry treating apparatus according to an embodiment of the present disclosure.
FIG. 6 is a table showing a plurality of treatment courses stored in a controller in a laundry treating apparatus according to an embodiment of the present disclosure.
FIG. 7 is a diagram showing a course selection screen on which a plurality of treatment courses are displayed in a laundry treating apparatus according to an embodiment of the present disclosure.
FIG. 8 is a table showing a plurality of treatment courses in which a user course is stored in addition to existing courses stored in a controller in a laundry treating apparatus according to an embodiment of the present disclosure.
FIG. 9 is a diagram showing a process of setting a user course in a laundry treating apparatus according to an embodiment of the present disclosure.
FIG. 10 is a diagram showing a process of selecting an additional course and adding the same to a plurality of treatment courses in a laundry treating apparatus according to an embodiment of the present disclosure.
FIG. 11 is a diagram showing a process of determining a setting value for one option in a laundry treating apparatus according to an embodiment of the present disclosure.

### [Best Mode]

Hereinafter, with reference to the attached drawings, embodiments of the present disclosure will be described in detail such that those skilled in the art may easily practice them.

However, the present disclosure may be implemented in several different forms and may not be limited to the embodiments described herein. Further, to clearly illustrate the present disclosure in the drawings, parts unrelated to the description are omitted, and similar drawing numerals are assigned to similar parts throughout the present document.

In the present document, redundant descriptions of the same components are omitted.

Further, in the present document, when a component is referred to as being 'connected' to another component, it should be understood that the components may be directly connected to each other, but there may be another component therebetween. On the other hand, in the present document, when a component is referred to as being 'directly connected' to another component, it should be understood that there is no other component therebetween.

Additionally, the terms used herein are merely used to describe specific embodiments and are not intended to limit the present disclosure.

Further, as used herein, singular expressions may include plural expressions, unless the context clearly dictates otherwise.

In addition, in the present document, it should be understood that terms such as 'include' or 'have' are only intended to indicate the presence of features, numbers, steps, operations, components, parts, or combinations thereof described herein, and do not preclude the presence or addition of other features, numbers, steps, operations, components, parts, or combinations thereof.

Further, in the present document, the term 'and/or' includes a combination of a plurality of listed items or any of the plurality of listed items. As used herein, 'A or B' may include 'A', 'B', or 'both A and B'.

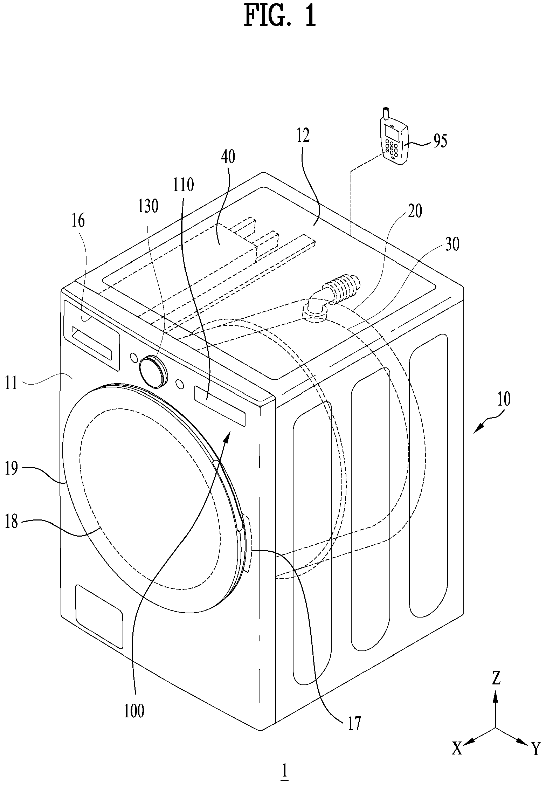

FIG. 1 shows a laundry treating apparatus 1 according to an embodiment of the present disclosure. Referring to FIG. 1, an embodiment of the present disclosure includes a cabinet 10. The cabinet 10 forms an outer appearance of the laundry treating apparatus 1, and defines a space in which a drum 30, which will be described later, or the like is accommodated therein.

The cabinet 10 may have various shapes as needed, such as a polygonal pillar or a circular pillar. When the cabinet 10 is formed in a rectangular parallelepiped shape as shown in FIG. 1, the cabinet 10 may be formed by coupling a plurality of panels to each other or by integrally molding and bending the plurality of panels.

When the cabinet 10 includes the plurality of panels, the plurality of panels may include a front panel 11, a rear panel, a top panel 12, a bottom panel 13, and a pair of side panels.

A laundry inlet 18 to allow laundry to be introduced into the cabinet 10 may be defined in the cabinet 10. The laundry inlet 18 may be defined in one surface of the cabinet 10 and may serve as an entrance for a user to insert the laundry into the cabinet 10.

The laundry inlet 18 may be defined in the front panel 11 or the top panel 12 of the cabinet 10. That is, in an embodiment of the present disclosure, the laundry inlet 18 may be defined in the front panel 11 and thus a front loading type may be employed, or the laundry inlet 18 may be defined in the top panel 12 and thus a top loading type may be employed.

FIG. 1 shows the front loading-type laundry treating apparatus 1 in which the laundry inlet 18 is defined in the front panel 11 of the cabinet 10, but the top loading-type may be employed when necessary.

The cabinet 10 may include a laundry door 19 for opening and closing the laundry inlet 18. The laundry door 19 may be disposed on the cabinet 10 in various ways to open and close the laundry inlet 18. FIG. 1 shows that the laundry door 19 is hinged to the cabinet 10 such that one side thereof is pivotable according to an embodiment of the present disclosure.

The laundry door 19 may be pivoted around a hinge to determine the opening and closing of the laundry inlet 18. For example, the laundry door 19 may open the laundry inlet 18 by pivoting around the hinge to be away from the cabinet 10, and close the laundry inlet 18 by pivoting around the hinge to come into close contact with the cabinet 10.

In one example, the cabinet 10 may be equipped with a door lock to lock the laundry door 19. The door lock may secure the laundry door 19 such that the state in which the laundry door 19 closes the laundry inlet 18 is maintained.

An embodiment of the present disclosure may include a controller 90, and the controller 90 may be connected in a signal manner to the door lock to control an operating state of the door lock, thereby controlling the closed state of the laundry door 19.

For example, the door lock may be controlled by the controller 90 to secure the laundry door 19 in the locked state such the closed state of the laundry door 19 does not change to the open state. When the door lock is unlocked, the laundry door 19 may be automatically pivoted to open the laundry inlet 18, or may be freely manipulated to the open state by the user.

The cabinet 10 may have a manipulation unit 100, and the manipulation unit 100 may include an input device 110 and an output device 130. FIG. 1 shows the manipulation unit 100 disposed at an upper side of the front panel 11, but a location, a shape, the number, and the like of the manipulation unit 100 may vary depending on need.

The manipulation unit 100 may be a means of exchanging signals or information between the user and the laundry treating apparatus 1, for example, the controller 90. A detailed description of the manipulation unit 100 will be made later.

FIG. 1 schematically shows a detergent supplier 40, the drum 30, a tub 20, and the like disposed inside the cabinet 10.

The tub 20 may be disposed inside the cabinet 10 and may accommodate water therein. The tub 20 may be constructed in the laundry treating apparatus 1 to use a large amount of water for treating the laundry, such as a washing course, a rinsing course, and the like.

That is, when the laundry treating apparatus 1 according to an embodiment of the present disclosure is constructed to perform a treatment course C100 of the laundry using washing water, such as the washing course, the tub 20 may be disposed inside the cabinet 10 and the drum 30 may be installed inside the tub 20.

However, when the laundry treating apparatus 1 is constructed to perform only the treatment course C100 that does not require the use of washing water, such as a drying course to remove moisture from the laundry, unlike the washing course, the tub 20 may be omitted. In other words, the laundry treating apparatus 1 may not have the tub 20 but only have the drum 30.

The drum 30 may be disposed inside the cabinet 10 and may accommodate the laundry therein. That is, the laundry that is introduced into the cabinet 10 via the laundry inlet 18 may be accommodated inside the drum 30 and undergo various treatment courses C100. A detailed description of the tub 20 and the drum 30 will be made later.

An embodiment of the present disclosure may include the detergent supplier 40. The detergent supplier 40 may provide detergent, which is to create and enhance a washing effect in the washing course or the like to remove contaminants from the laundry, into the drum 30.

The laundry treating apparatus 1 according to an embodiment of the present disclosure may be in communication with a user's terminal 95. The user's terminal 95 may refer to a device through which the user may input or receive information while away from the laundry treating apparatus 1. For example, a mobile phone, a computer, and the like that the user may carry may correspond to the terminal 95.

An embodiment of the present disclosure may establish the communication with the terminal 95 via the controller 90, and the information may be transmitted and received. A detailed description of the communication with the terminal 95 or the like will be made later.

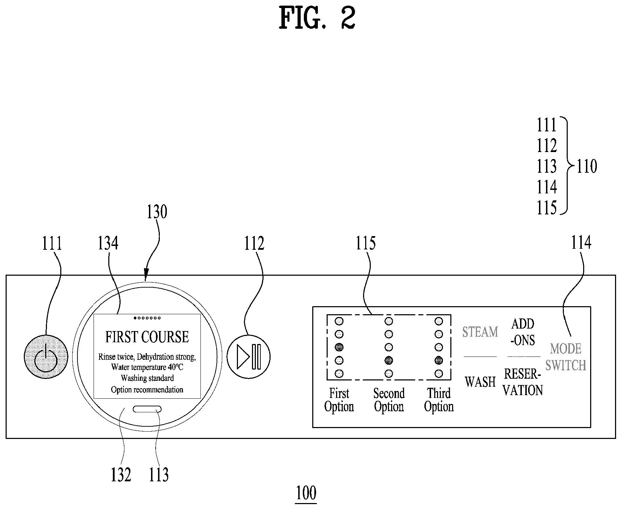

FIG. 2 shows the manipulation unit 100 according to an embodiment of the present disclosure. The manipulation unit 100 may include the input device 110 that generates an input signal when manipulated by the user, and the output device 130 that provides various information to the user in response to an output signal of the controller 90.

The manipulation unit 100 may include the input device 110 and/or the output device 130, and the input device 110 and the output device 130 may be located together or separated from each other. The input device 110 and the output device 130 may respectively include a plurality of input devices and a plurality of output devices, and may be disposed at various locations of the cabinet 10.

FIG. 2 shows the manipulation unit 100 in which the input device 110 and the output device 130 are disposed together and constructed as one control panel according to an embodiment of the present disclosure. Referring to FIG. 2, the output device 130 may include a display 134 that outputs a screen to provide visual information to the user.

Specifically, the output device 130 may include a screen peripheral portion 132 that surrounds the display 134 and the display 134 located on the screen peripheral portion 132, and may be connected to the controller 90 and output the screen providing necessary information to the user via the display 134. Additionally, the output device 130 may further include a speaker for providing an auditory signal, such as various notification sounds, to the user.

The input device 110 may be manipulated by the user to generate various input signals. For example, the input device 110 may include components such as buttons that are physically manipulated by the user, touch-based components that generate signals by being in contact with a user's hand or the like, and microphones that receive a voice signal or the like from the user.

In the present disclosure, the buttons include a physical button that is manipulated by the user to generate a physical change, and a touch button that generates an electrical signal as the user's hand or the like comes into contact therewith. In other words, in the present disclosure, buttons may be formed with various types and shapes depending on need.

Referring to FIG. 2, the input device 110 may include a power button 111. When the power button 111 is pressed, power may be applied to various components disposed in the laundry treating apparatus 1.

The laundry treating apparatus 1 according to an embodiment of the present disclosure may be connected to an external power source and maintain a standby state or a sleep state in which power is not applied to remaining components except for some components, and then when the power button 111 is manipulated, may be switched to a power-on state or a wake-up state in which preparation to perform the treatment course C100 of the laundry is made as the power is also applied to the remaining components.

An embodiment of the present disclosure may include a power standby unit that receives the power from the external power source at all times regardless of the standby state and the power-on state, and the power standby unit may allow the power application to other components such as the as controller 90 when the power button 111 is pressed in the sleep state.

In one example, the input device 110 may include a display button 113. The display button 113 may be disposed in the screen peripheral portion 132 of the output device 130 or may be disposed around the same. Additionally, the display button 113 may be replaced with a scheme of touching the display 134.

A command based on screen information output from the display 134 may be input via the display button 113. For example, the user may manipulate the display button 113 to select a specific area or one item of the screen output on the display 134.

Additionally, the input device 110 may include a movement button. The movement button may be disposed on or around the screen peripheral portion 132. The movement button may be replaced with a jog disposed on the screen peripheral portion 132 or the like and rotated, or may be replaced with the scheme of touching the display 134.

The user may change an object to be selected among a plurality of items on the screen output on the display 134 by manipulating the movement button.

The input device 110 may include a perform button 112. The perform button 112 may also be defined as a pause button. An embodiment of the present disclosure may perform the various treatment courses C100 for treating the laundry accommodated inside the drum 30 via control of the controller 90 or the like. The user may manipulate the perform button 112 to perform or pause the treatment course.

In one example, the input device 110 may include a pairing control button 114. The laundry treating apparatus 1 according to an embodiment of the present disclosure may activate a pairing mode in which communication with another external device, such as an external device 2, is allowed to enable information exchange therebetween, and may activate a pairing control mode to directly control the external device 2 in the pairing mode.

In other words, when the pairing control mode is activated, the user may use the input device 110 or the like disposed on the cabinet 10 according to an embodiment of the present disclosure to control operation of the external device 2 paired with the laundry treating apparatus 1 according to an embodiment of the present disclosure.

In other words, in an embodiment of the present disclosure, the controller 90 may activate a pairing mode in which it is permitted to be in communication with the external device 2 located outside the cabinet 10 and exchanges information therewith. The controller 90 may activate the pairing mode while being in communication with the further controller 90 of the external device 2.

In the pairing mode, when the user presses the pairing control button 114 of the input device 110, the controller 90 may activate the pairing control mode of directly transmitting a command to the further controller 90 of the external device 2 via the input device 110. In one example, the pairing control may also be performed by the further controller 90 of the external device 2.

In one example, the input device 110 may include an option setting unit 115. In an embodiment of the present disclosure, the user may adjust setting values for a plurality of options by manipulating the option setting unit 115.

Specifically, in an embodiment of the present disclosure, the controller 90 may be in a state in which the various treatment courses C100 for treating the laundry are preset.

For example, the plurality of treatment courses C100 may include the washing course to remove the contaminants from the laundry, the rinsing course to rinse the laundry, a dehydration course to remove moisture from the laundry via a physical scheme such as a centrifugal force, the drying course to remove moisture from the laundry via a phase change such as evaporation of water.

In one example, each of the plurality of treatment courses C100 may include a plurality of adjustable options. Each of the plurality of options may have a plurality of option values that the user may select, and one of the plurality of option values may be applied as a setting value for the corresponding option.

The user may manipulate the option setting unit 115 to change setting values of options for which change of the setting value is permitted. That is, each option may be set to have an initial setting value before being changed by the user, and the user may change a setting value of a specific option from the initial setting value to another option value via the option setting unit 115.

The option setting unit 115 may include a plurality of buttons for changing each option, and may be controlled by the controller 90 such that manipulation is permitted for options that may be changed by the user in a currently selected treatment course C100, and signal generation is inhibited for options that the user is not able to change.

For example, the controller 90 may reflect the change in the option that may be changed by the user for the currently selected treatment course C100, but may ignore the corresponding command when the change of the option that the user is not able to change is input.

The input device 110 according to an embodiment of the present disclosure may include various buttons for use convenience of the user in addition to the plurality of buttons mentioned above.

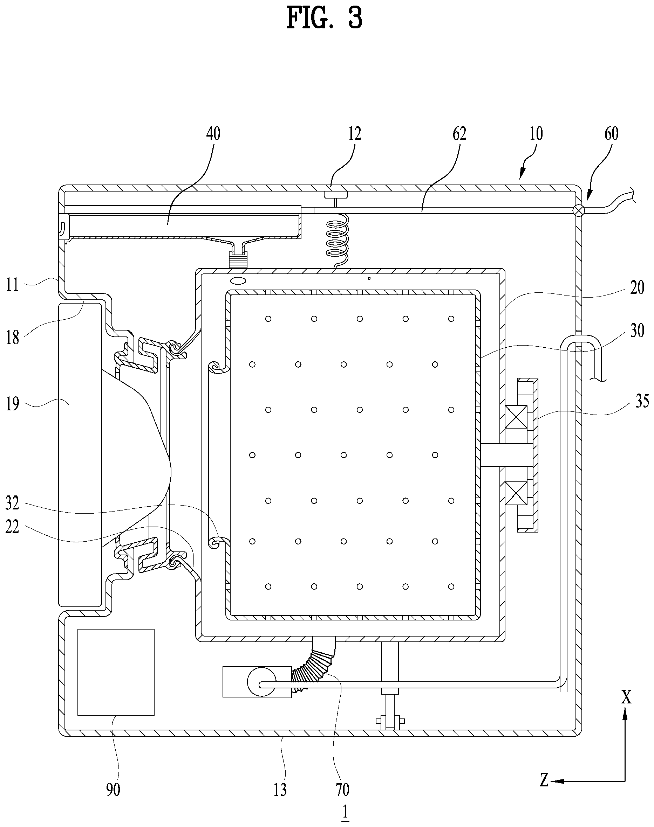

FIG. 3 shows the laundry treating apparatus 1 including the tub 20 and the detergent supplier 40 in an embodiment of the present disclosure.

Referring to FIG. 3, when the washing course of the like of the laundry is performed in the laundry treating apparatus 1 according to an embodiment of the present disclosure, the laundry treating apparatus 1 may include the tub 20, the detergent supplier 40, and the like.

Referring to FIG. 3, the tub 20 may be disposed inside the cabinet 10, may define an internal space therein to accommodate water, and may have various shapes. A tub inlet 22 facing the laundry inlet 18 of the cabinet 10 may be defined in one surface of the tub 20.

For example, the tub 20 may have a cylindrical shape with the space defined therein, and the tub inlet 22 may be defined in a front surface of the tub 20 facing the laundry inlet 18. The laundry input via the laundry inlet 18 may be put into the tub 20 via the tub inlet 22.

The drum 30 may be disposed inside the tub 20. The drum 30 may have various shapes with a space defined therein. The drum 30 may be rotatable by a driver 35.

The driver 35 may be disposed outside the tub 20, and the drum 30 may have a rotation shaft connected to a rear surface thereof. The driver 35 may be directly connected to the rotation shaft or indirectly connected thereto via a belt or the like.

The drum 30 may be rotatably disposed inside the tub 20, and may have a drum inlet 32 facing the tub inlet 22 in one surface thereof. That is, the inside of the drum 30 may be in communication with the outside via the drum inlet 32, the tub inlet 22, and the laundry inlet 18.

Accordingly, the laundry input by the user via the laundry inlet 18 may be accommodated inside the drum 30 after passing through the laundry inlet 18, the tub inlet 22, and the drum inlet 32. The laundry inlet 18, the tub inlet 22, and the drum inlet 32 may be aligned in a direction parallel to the rotation shaft of the drum 30.

The drum 30 may have a circular cross-section to facilitate rotation around the rotation shaft. For example, the drum 30 may be formed in a cylindrical shape. Additionally, a plurality of through-holes may be defined in a circumferential surface of the drum 30.

The drum 30 installed inside the tub 20 that accommodates water therein may allow water inside the tub 20 to flow into the drum 30 via the through-holes, thereby providing water to the laundry.

An embodiment of the present disclosure may include a water supplier 60. The water supplier 60 may be connected to an external water source disposed outside the cabinet 10, such as an urban water source, and supply water into the cabinet 10.

The water supplier 60 may include a water supply valve to regulate a flow of water, and water introduced from outside the cabinet 10 may flow along a water supply pipe 62 and be directly supplied into the tub 20 or may be supplied to the detergent supplier 40.

The detergent supplier 40 may store detergent therein, and may supply the detergent into the tub 20 or the drum 30. When the water supply pipe 62 is connected to the detergent supplier 40, the detergent supplier 40 may supply water supplied via the water supply pipe 62 and the detergent together into the tub 20.

An embodiment of the present disclosure may include a drainage 70. The controller 90 may perform a drain process by controlling the drainage 70 to discharge water inside the tub 20 to the outside during the washing course or the like.

The drainage 70 may include a drain pipe that is connected to the tub 20 and is for allowing water inside the tub 20 to flow to the outside, may include a drain valve for regulating a flow of water in the drain pipe, and may include a drain pump to generate the flow of water in the drain pipe.

An embodiment of the present disclosure may include the controller 90. The controller 90 may be connected in a signal manner to the various components that consume the power and may control the operation of the respective components. The controller 90 may be divided into a plurality of pieces or include various sub-divided components as needed.

For example, the controller 90 may functionally include a communication unit for communication with the outside or other components, storage for storing information, and an operation unit for information processing. Additionally, the controller 90 may include a sub-controller 90 equipped for each component, and a main controller 90 that is connected in a signal manner to the sub-controller 90 and is responsible for controlling the sub-controller 90.

At least some of the sub-divided components of the controller 90, which are differentiated by function or configuration as described above, may be spatially and functionally integrated with each other as needed. Additionally, at least some of the sub-divided components may be disposed to be spatially separated from each other.

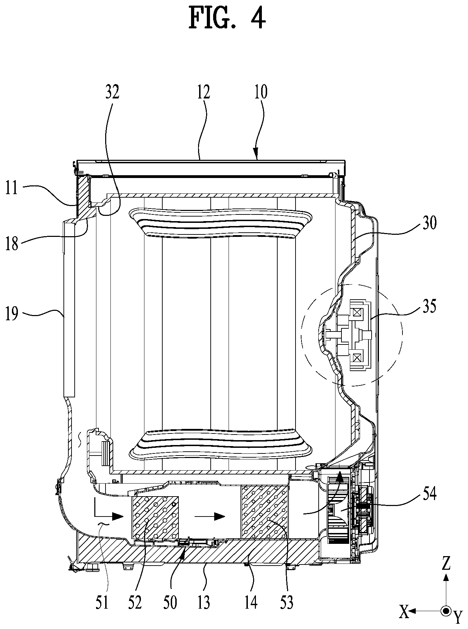

FIG. 4 shows a form in which the tub 20 and the detergent supplier 40 are omitted and the drying course of the laundry is able to be performed according to an embodiment of the present disclosure.

Referring to FIG. 4, in the form in which the tub 20 is omitted, the drum 30 may be rotatably disposed inside the cabinet 10. The driver 35 may be located in one side of the cabinet 10 and may be connected to the drum 30 itself or the rotation shaft of the drum 30 to provide the rotational force to the drum 30.

In one example, a heater 50 to provide high-temperature air to the laundry inside the drum 30 may be disposed inside the cabinet 10. The heater 50 may be installed on a base 14 that is located on the bottom panel 13 and disposed inside the cabinet 10.

FIG. 4 shows the heater 50 disposed outside the drum 30 to provide dehumidified and heated air, and into which air that has passed through the inside of the drum 30 is re-introduced.

Referring to FIG. 4, the heater 50 may include an air passage 51 in communication with the inside of the drum 30. Air containing water vapor generated by evaporation of moisture present in the laundry may exist inside the drum 30, and air inside the drum 30 may be discharged from the drum 30 and flow into the air passage 51. For example, air discharged from the inside of the drum 30 to the outside of the drum 30 via the drum inlet 32 may flow into the air passage 51 and flow along the air passage 51.

In one example, the heater 50 may include a dehumidifying unit 52. The dehumidifying unit 52 may come into contact with air flowing along the air passage 51 to condense water vapor in air and remove water vapor from air. Accordingly, air flowing along the air passage 51 may be dehumidified such that water vapor is greatly reduced as it passes through the dehumidifying unit 52.

The heater 50 may include a temperature increasing unit 53. The temperature increasing unit 53 may be in direct contact with air flowing along the air passage 51 or may be in thermal contact with air to heat air. Air flowing along the air passage 51 may be dried at a high temperature while passing through the dehumidifying unit 52 and the temperature increasing unit 53.

The heater 50 may include a fluid system forming the dehumidifying unit 52 and the temperature increasing unit 53. The fluid system may include a compressor, a condenser, a diffusion valve, and an expander, the dehumidifying unit 52 may correspond to the expander, and the temperature increasing unit 53 may correspond to the condenser.

However, in an embodiment of the present disclosure, the heater 50 is not limited to including the fluid system, and the dehumidifying unit 52 and the temperature increasing unit 53 may be in various schemes.

The heater 50 may include an air fan 54. The air fan 54 may be located in a space in communication with the air passage 51, for example, on the air passage 51 to generate a flow of air. By operating the air fan 54, air inside the drum 30 may flow and circulate through the air passage 51.

That is, in an embodiment of the present disclosure, the heater 50 dehumidifies and heats air flowing along the air passage 51 in communication with the inside of the drum 30 and supplies air back to the inside of the drum 30, thereby providing high-temperature dry air into the drum 30 and removing moisture contained in the laundry.

However, the heater 50 in FIG. 4 is only an example of the heater 50 for performing the drying course. In the present disclosure, a scheme or a type of the heater 50 for providing high-temperature air to the laundry is not necessarily limited as above.

For example, the heater 50 may be of an exhaust type that allows air from outside the cabinet 10 to be introduced and flow into the drum 30, and discharges air inside the drum 30 to the outside. Additionally, the heater 50 may also be of a static type that heats and dehumidifies air inside the drum 30 while not causing the flow of air.

In addition, the laundry treating apparatus 1 shown in FIG. 3 and the laundry treating apparatus 1 shown in FIG. 4 are shown separately for convenience of description, and it goes without saying that the respective components cannot coexist with each other.

For example, an embodiment of the present disclosure may include the water supplier 60, the tub 20, the detergent supplier 40, and the like to perform the washing course of the laundry, and at the same time, include the heater 50 of various types to perform the drying course of the laundry.

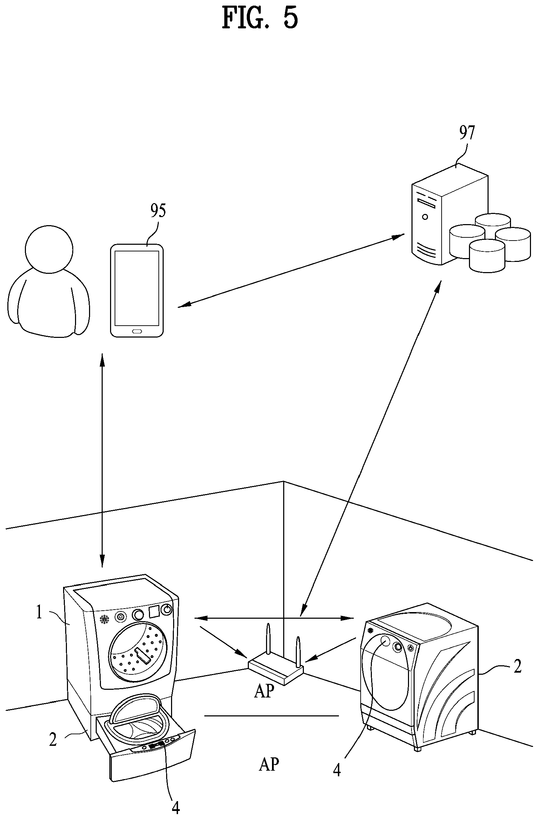

FIG. 5 schematically shows various communication environments that may be established by the laundry treating apparatus 1 according to an embodiment of the present disclosure.

Referring to FIG. 5, the laundry treating apparatus 1 according to an embodiment of the present disclosure may activate the pairing mode with the at least one external device 2. For example, the laundry treating apparatus 1 according to an embodiment of the present disclosure may activate the pairing mode via mutual communication with the external device 2 disposed outside the cabinet 10.

That is, the controller 90 may activate the pairing mode via the communication with the further controller 90 of the external device 2. The controller 90 may activate the pairing mode by exchanging the information with the further controller 90 or the further communication unit of the external device 2 via the communication unit.

FIG. 5 shows a connection to the two external devices 2 according to an embodiment of the present disclosure, but the number of external devices 2 that may be connected to the laundry treating apparatus 1 according to an embodiment of the present disclosure may vary.

In an embodiment of the present disclosure, the external device 2 may perform an external treatment course C100 to treat the laundry. For example, the external device 2 may include the drum 30 to accommodate the laundry therein. The external device 2 may be equipped with the further controller 90 for controlling various devices disposed in the external device 2, separately from the controller 90 of the laundry treating apparatus 1 according to an embodiment of the present disclosure.

In addition, the external device 2 may include a further output device 130 that outputs a screen to provide information related to an operation situation or a laundry treatment state controlled by the further controller 90.

The laundry treating apparatus 1 according to an embodiment of the present disclosure may perform the washing course of the laundry, and the external device 2 may perform the drying course of the laundry.

The opposite case may also be possible, and both the laundry treating apparatus 1 according to an embodiment of the present disclosure and the external device 2 may perform the laundry washing course or the drying course.

In an embodiment of the present disclosure, a communication scheme by which the controller 90 and the external device 2 exchange the information may vary. For example, controller 90 may be in direct communication with the further communication unit of the external device 2 via the communication unit in a scheme, such as Bluetooth.

In addition, the controller 90 or the communication unit may be equipped separately from the laundry treating apparatus 1 according to an embodiment of the present disclosure and the external device 2, and may exchange the information via an external communication medium 96 that provides signals for communication.

For example, the external communication medium 96 may generate a Wi-Fi signal, and the controller 90 may exchange the information with the external communication medium 96 based on the Wi-Fi signal. The further controller 90, which is disposed in the external device 2 and distinct from the controller 90 of the laundry treating apparatus 1 according to an embodiment of the present disclosure, may receive signals transmitted from the controller 90 via information exchange with the external communication medium 96.

When the controller 90 directly generates the signal as above and when the external communication medium 96 is used as the signal generation means, a collection path of the information transmitted externally from the controller 90 or the information received by the controller 90 may also vary.

For example, even when the controller 90 directly transmits or receives the signal, the controller 90 may directly transmit the signal to the further controller 90 of the external device 2, or a scheme in which the signal is transmitted to an external server 97 and the further controller 90 receives the signal from the server 97 may be used.

Even when the controller 90 uses the external communication medium 96, the information transmitted from the controller 90 to the external communication medium 96 may be directly transmitted to the external device 2, or the information transmitted to the external communication medium 96 may be transmitted to the server 97 and then is the further controller 90 of the external device 2 may receive the information from the server 97.

In one example, a relationship between a sender and a receiver may be changed between the controller 90 disposed in the laundry treating apparatus 1 according to an embodiment of the present disclosure and the further controller 90 of the external device 2.

In one example, the laundry treating apparatus 1 according to an embodiment of the present disclosure may also be permitted to be in communication with the user's terminal 95 described above. For example, the controller 90 may provide information related to the current operating state to the user via the terminal 95, and a remote control mode controlled based on a command transmitted from the terminal 95 may be activated via the information exchange with the terminal 95.

Communication or a scheme of exchanging information between the controller 90 and the terminal 95 may be the same as the communication or the scheme of exchanging the information between the controller 90 and the further controller 90 described above. For example, the controller 90 may exchange the information directly with the terminal 95 or may exchange the information via the external communication medium 96 and/or the server 97.

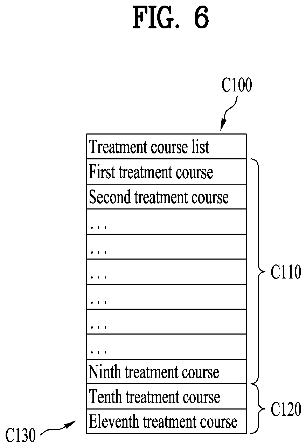

In one example, FIG. 6 shows a list showing the plurality of treatment courses C100 stored in the controller 90 and provided to the user in the laundry treating apparatus 1 according to an embodiment of the present disclosure.

Referring to FIG. 6, in an embodiment of the present disclosure, the plurality of treatment courses C100 may include an existing course C110 preset in the controller 90 and a user course C130 set and added by the user.

First, the laundry treating apparatus 1 according to an embodiment of the present disclosure may include the cabinet 10 and the drum 30, and the drum 30 may be rotatably disposed within the cabinet 10 and may accommodate the laundry therein.

In one example, the controller 90 may be disposed inside the cabinet 10, and the plurality of treatment courses C100 for treating the laundry may be stored. In an embodiment of the present disclosure, the treatment process of the laundry accommodated in the drum 30 may be performed via a control process of the controller 90.

The treatment course C100 may correspond to the treatment process of the laundry preset in the controller 90 to treat the laundry, and the treatment course C100 may include at least one cycle to treat the laundry.

For example, the plurality of treatment courses C100 may include the washing course for washing the laundry. The washing course may include a water supply cycle in which water is supplied into the tub 20, a washing cycle in which detergent is supplied and the drum 30 is rotated to perform the wash of the laundry, a drainage cycle in which contaminated water inside tub 20 is discharged after the washing cycle, a dehydration cycle in which moisture is removed from the laundry via the rotation of the drum 30, and the like.

In addition to the washing course, the plurality of treatment courses C100 may include the rinsing course with a rinsing course as a main cycle, a dehydration course with the dehydration cycle as a main cycle, and the like.

Additionally, the plurality of treatment courses C100 may be preset to have different option setting values. For example, the plurality of treatment courses C100 may include a standard washing course in which a plurality of options are applied as standard values, a rapid washing course in which a water supply amount option is adjusted to a lower value to shorten a washing time and a rotation RPM of the drum 30 is increased, a comforter washing course in which the water supply amount option is adjusted to a higher value to wash a large amount of laundry, such as a comforter, and a rinsing number option and a dehydration number option are adjusted to higher values, and the like.

In one example, the plurality of treatment courses C100 may include the existing course C110 that is preset in the controller 90, and may further include the user course C130 that is additionally created in addition to the existing course C110 as the user sets the option.

That is, in an embodiment of the present disclosure, the plurality of treatment courses C100 stored and set in the controller 90 may include the existing course C110 and the user course C130.

The existing course C110 may be stored in advance in the controller 90 during a manufacturing process of the laundry treating apparatus 1 according to an embodiment of the present disclosure. There may be a plurality of existing courses C110, and the user may select one of the existing courses C110 and command execution thereof via the course selection screen P200 or the like of the output device 130 in a course selection process to be described later.

Accordingly, in the course selection process for treating the laundry, the user may proceed with the laundry treatment process by selecting one of the plurality of existing courses C 110 stored in advance in the controller 90 that meets current needs.

In one example, in the user course C130, unlike in the existing course C110, the plurality of options may be directly set by the user and additionally stored in the controller 90. In other words, unlike the user changing and setting the option of the existing course C110 as desired each time the laundry treating apparatus 1 is used, the user course C130 always provides the option settings set by the user each time when the laundry treating apparatus 1 is used, so that the user may avoid hassle of changing the option of the treatment course C100 each time the laundry treating apparatus 1 is used.

FIG. 6 shows a list of the treatment courses C100 including the user course C130 among the plurality of treatment courses C100. The controller 90 may provide the plurality of treatment courses C100 existing in the treatment course C100 list to the user and allow the user to select those via the output device 130, the terminal 95, or the like, and the user may select the user course C130 created by himself/herself among the plurality of treatment courses C100, so that the treatment course C100 of the laundry, which reflects the user's preference, may be easily used.

In one example, the user course C130 may be maintained as part of the plurality of treatment courses C100 even after power supply to the controller 90 is cut off and the power is re-supplied to the controller 90.

As described above, when using the existing course C110 by changing the option thereof, an initial setting value based on a stored value that is stored in the controller 90, rather than the option setting value that the user changed immediately before, is provided for the existing course C110 in a state in which the laundry treating apparatus 1 is powered off and then powered on again, so that the user has to change the initial setting value back to the desired setting value.

However, because the user course C130 is set and saved by the user, even when the power-off state and the power-on state of the laundry treating apparatus 1 are repeated, the user course C130 that reflects the setting value of the option desired by the user may always be provided to the user.

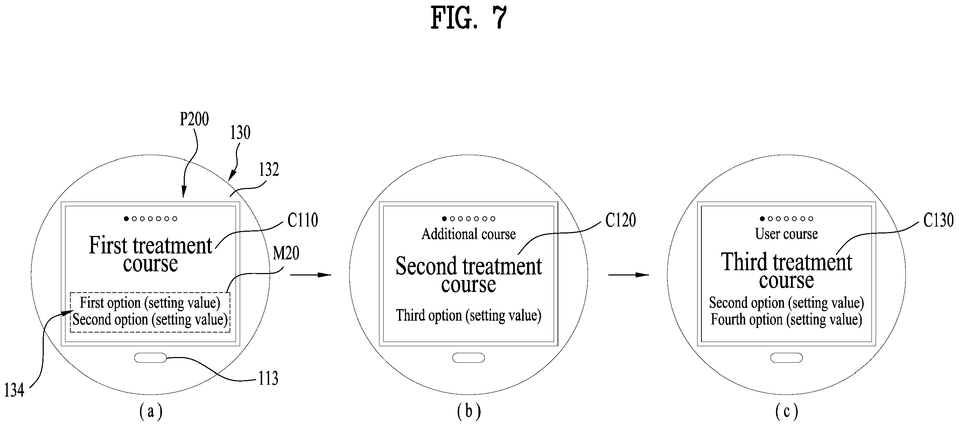

FIG. 7 shows the course selection screen P200 that is output via the output device 130 and provided to the user. An embodiment of the present disclosure may include the above-described output device 130, and the output device 130 may be disposed on the cabinet 10 and output a screen provided to the user.

The output device 130 may output the course selection screen P200 on which one of the plurality of treatment courses C100 is selected, and the user course C130 may be displayed on the course selection screen P200 as one of the plurality of treatment courses C100, together with the existing course C110.

Specifically, in an embodiment of the present disclosure, the controller 90 may perform the course selection process after the power is applied, allowing the user to select one of the plurality of treatment courses C100 and set the option.

In the course selection process, the controller 90 may control the output device 130 such that the course selection screen P200 is output to the user via the display 134.

The course selection screen P200 may display the plurality of treatment courses C100 stored in the controller 90. A scheme of displaying the plurality of treatment courses C100 may vary. For example, at least two treatment courses C100 may be displayed together on the course selection screen P200, or as shown in FIG. 7, a treatment course C100 to be selected among the plurality of treatment courses C100 may be displayed on the screen.

The user may identify the treatment course C100 to be selected via the course selection screen P200, and may manipulate a movement button disposed on the input device 110, for example, a jog dial, to change the treatment course C100 to be selected among the plurality of treatment courses C100.

In one example, in an embodiment of the present disclosure, the plurality of treatment courses C100 include the user course C130, so that the user course C130 may be displayed on the course selection screen P200.

That is, the user may manipulate the movement button such that user course C130 is displayed on the course selection screen P200 output from the output device 130, and when the user course C130 is displayed as a selection target on the course selection screen P200, may press the perform button 112 or the like of the input device 110 to command the controller 90 to perform the laundry treatment process based on the user course C130.

(a) in FIG. 7 shows a course selection screen P200 displaying a first treatment course C100 corresponding to the existing course C110, (b) in FIG. 7 shows a course selection screen P200 displaying a second treatment course C100 instead of the first treatment course C100 as the user manipulates the movement button, and (c) in FIG. 7 shows a course selection screen P200 displaying a third treatment course C100 corresponding to the user course C130 instead of the second treatment course C100 as the user manipulates the movement button.

An order of the plurality of treatment courses C100 displayed on the course selection screen P200 may be set directly by the user via the input device 110, the terminal 95, or the like, or an order recommended by the controller 90 may be applied.

Additionally, because the user course C130 is the treatment course C100 that reflects the user's intention, the user course C130 may be displayed on the course selection screen P200 first among the plurality of treatment courses C100, reflecting expected preferences.

In one example, in an embodiment of the present disclosure, the user course C130 may be created to have the option set via the input device 110 disposed on the cabinet 10 or the user's terminal 95.

In other words, as mentioned above, unlike the existing course C110, the user course C130 does not have the initial setting value of the option preset in the controller 90. Instead, the option setting value directly set by the user is stored in the user course C130 as the initial setting value. Therefore, in each course selection process, the setting value of the option may be maintained at the value set by the user and provided to the user.

FIG. 7 shows an option display area M20 where the option setting value of each treatment course C100 is displayed on the course selection screen P200 output via the output device 130 in an embodiment of the present disclosure.

The user may easily identify the option setting value of the corresponding treatment course C100 via contents of the option display area M20 on the course selection screen P200. In one example, when the course selection screen P200 displays the user course C130, the option setting value directly set by the user may be displayed in the option display area M20.

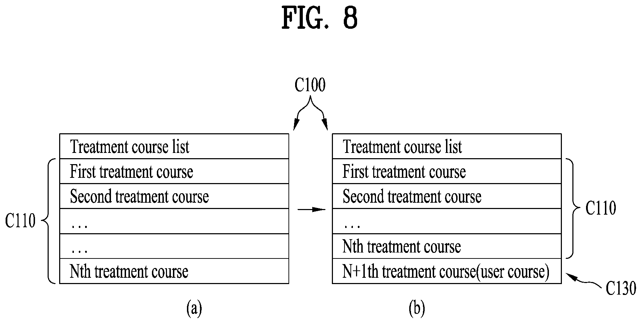

FIG. 8 shows a treatment course C100 list that changes with addition of the user course C130 in an embodiment of the present disclosure.

Specifically, (a) in FIG. 8 shows a treatment course C100 list composed only of n existing courses C110 that are stored in advance in the controller 90 before adding the user course C130. The corresponding list may be provided to the user via a settings screen of the output device 130, the terminal 95, or the like.

In one example, (b) in FIG. 8 shows a treatment course C100 list stored in the controller 90 with the user course C130 added. That is, in an embodiment of the present disclosure, when adding the user course C130, the user course C130 may be additionally stored in the controller 90 while the existing course C110 is maintained as is, and the entire treatment course C100 list including the user course C130 may be provided to the user via the output device 130 or the terminal 95.

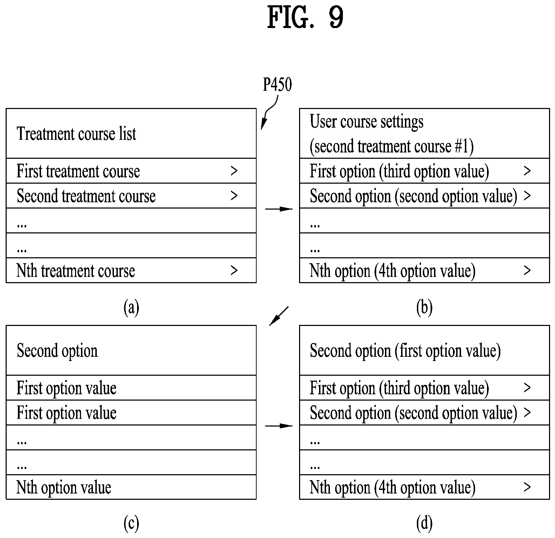

In one example, referring to FIG. 9, in an embodiment of the present disclosure, a user course setting screen P450 for creating the user course C130 may be provided to the output device 130 that is disposed on the cabinet 10 to output the screen or the user's terminal 95.

FIG. 9 shows the user course setting screen P450. (a) to (d) in FIG. 9 correspond to the user course setting screen P450 that may be provided to the user via the output device 130 or the terminal 95 during the setting process of the user course C130.

An embodiment of the present disclosure may provide the user course settings screen P450 from the output device 130 via a settings button or the like of the input device 110, and the user may check the user course settings screen P450 and select and save a user course C130 with an option desired by the user.

Additionally, in an embodiment of the present disclosure, the user course setting process may be performed via the user's terminal 95 in association with the controller 90. In this case, the user course setting screen P450 may be provided on the terminal 95, and the user may set and save the user course C130 by manipulating the terminal 95.

The user course settings screen P450 provided via the output device 130 and the user course settings screen P450 provided via the terminal 95 may be the same as each other, and may provide the same information to the user even when they are different from each other.

In one example, in an embodiment of the present disclosure, the user course C130 may be created as a new course distinct from the existing course C110 by changing the setting value of the option from the existing course C110.

That is, in an embodiment of the present disclosure, the user course C130 may be saved and used by changing only the setting value of the desired option from the existing course C110 that is stored in advance in the controller 90 and provided to the user.

For example, in an embodiment of the present disclosure, the plurality of existing courses C110 may be set in the controller 90, and the user course C130 may be created as the new course with the changed setting value of the option by the user from one selected by the user among the plurality of existing courses C110.

Specifically, when a user course setting command is input from the user, the controller 90 may provide a list of the plurality of treatment courses C100 currently stored in the controller 90 as the user course setting screen P450, as shown in (a) in FIG. 9.

The user may select a desired course among the plurality of treatment courses C100 displayed on the screen as shown in (a) in FIG. 9, and the output device 130 may display respective options of the treatment course C100 selected by the user as shown in (b) in FIG. 9.

For the treatment course C100 selected by the user to be easily identified, the user course C130 may include a name of the corresponding treatment course C100 or a name changed therefrom, for example, a name such as 'second treatment course C100#1' as shown in (b) in FIG. 9 as a default name.

When the output device 130 displays a plurality of options that may be set in the corresponding treatment course C100 as shown in (b) in FIG. 9, the user may select one of those. When one of the plurality of options is selected, the output device 130 may output a screen including a list including plurality of option values for the corresponding option as shown in (c) in FIG. 9.

(c) in FIG. 9 shows a screen on which a second option of the second treatment course C100 is selected as an example for illustrating the present disclosure. In an embodiment of the present disclosure, in each of the plurality of options, the plurality of option values that may be selected as the setting value may be predetermined and stored in the controller 90.

For example, two option values, 'apply' and 'not apply', may be provided to the user for a steam option, or three option values, 'high', 'medium', and 'low' may be provided to the user in a selectable manner for the water supply amount option.

However, the plurality of options and the option values resulted therefrom may not be limited as above, but may be set in various ways and provided to the user.

(c) in FIG. 9 shows a screen on which n option values selectable in the second option are displayed in a selectable manner according to an embodiment of the present disclosure. The user may select one option value as the setting value via the input device 110 or the like on the user course setting screen P450 on which the plurality of option values are displayed, as shown in (c) in FIG. 9.

When the one option value is selected by the user as the setting value of the corresponding option while the plurality of option values are output as shown in (c) in FIG. 9, the output device 130 may output a list of the plurality of options reflecting the setting value again on the screen as shown in (d) in FIG. 9.

By repeating such option setting process, the user may change the option values of the plurality of options of the desired existing course C110 to the desired setting values, and when the user commands to save the user course C130 for which the settings are completed, the controller 90 may store information of the corresponding user course C130 as one of the plurality of treatment courses C100.

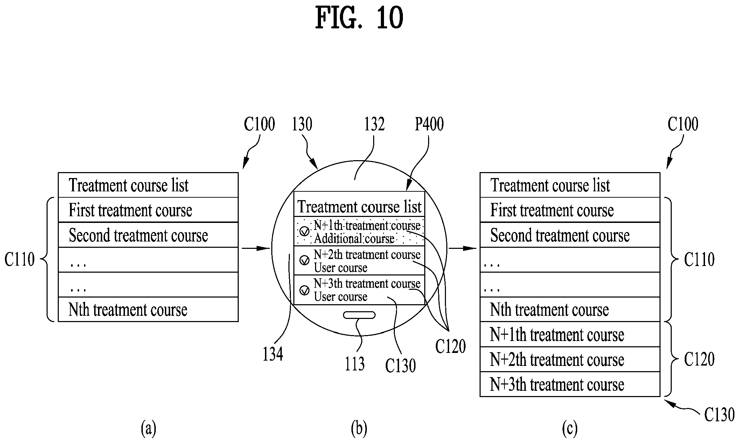

FIG. 10 shows a process in which at least one additional course C120 is added to the plurality of treatment courses C100 according to an embodiment of the present disclosure. Referring to FIG. 10, in an embodiment of the present disclosure, the controller 90 may store the additional course C120 additionally created by the user in addition to the existing course C110 as part of the plurality of treatment courses C100, and the user course C130 may correspond to the additional course C120.

In an embodiment of the present disclosure, the plurality of treatment courses C100 may include the additional course C120 in addition to the existing course C110 described above. The additional course C120 refers to a treatment course C100 that the user selectively saves in the controller 90, unlike the existing course C110 stored in advance in the controller 90, and the aforementioned user course C130 corresponds to part of the additional courses C120.

That is, in an embodiment of the present disclosure, in the list of the plurality of treatment courses C100 composed only of the existing courses C110 as shown in (a) in FIG. 10, when a command to save the additional course C120 selected by the user is input to the controller 90, the treatment course C100 list stored in the controller 90 may be modified to include the additional course C120 in addition to the n existing courses C110 stored in advance, as shown in (c) in FIG. 10.

In one example, the additional course C120 may be set to be deleted from the controller 90 by the user. That is, the user may select and delete some of the additional courses C120 added to the plurality of treatment courses C100 via the input device 110 or the terminal 95, thereby modifying the treatment course C100 list based on a user's request.

An embodiment of the present disclosure may set the controller 90 to prevent the user from arbitrarily deleting the existing course C110 in consideration of system stability, but when necessary, it may be set that the existing course C110 may also be deleted by the user.

In one example, referring to (b) in FIG. 10, in an embodiment of the present disclosure, an additional course C120 recommendation screen P400 that provides the additional course C120 that may be additionally created in the controller 90 may be output from the output device 130 that is disposed on the cabinet 10 and outputs the screen or the user's terminal 95.

The controller 90 may store the additional course C120 selected by the user on the additional course C120 recommendation screen P400 as part of the plurality of treatment courses C100.

Specifically, the additional course C120 may be preset and prepared from outside of the laundry treating apparatus 1 according to an embodiment of the present disclosure, such as in the server 97. Alternatively, the controller 90 may create the additional course C120 by considering a user's usage pattern.

The output device 130 or the terminal 95 may output the additional course C120 recommendation screen P400 to suggest the additional course C120 to the user. At least one additional course C120 may be displayed in a selectable manner on the additional course C120 recommendation screen P400, and the user may select whether to add each additional course C120 on the additional course C120 recommendation screen P400.

(b) in FIG. 10 shows the additional course C120 recommendation screen P400 according to an embodiment of the present disclosure. The above-mentioned user course C130, as one of the additional courses C120, may be displayed on the additional course C120 recommendation screen P400 and may be selected for application.

The additional course C120 may have various features, and may be provided to the server 97 or the like, so that information corresponding thereto may be provided to the terminal 95 or the controller 90. For example, the additional course C120 may be provided with various features reflected, such as a 'school uniform course' specialized in washing of school uniforms or a 'baby clothes course' specialized in laundry that is delicate and requires a sterilizing effect, such as baby clothes.

The user may select an additional course C120 that the user wants to reflect among additional courses C120 recommended on the additional course C120 recommendation screen P400, and may release selection of an additional course C120 that the user does not want to reflect.

(b) in FIG. 10 shows the additional course C120 recommendation screen P400 on which three additional courses C120, including the user course C130, are displayed, and shows that all three additional courses C120 are selected.

While the additional course C120 recommendation screen P400 as shown in (b) in FIG. 10 is output on the output device 130 or the terminal 95, when the user commands the reflection of the corresponding additional courses C120 via the input device 110 or the terminal 95, the controller 90 may store the additional courses C120 and provide the additional courses C120 on the course selection screen P200 or the like as the plurality of treatment courses C100.

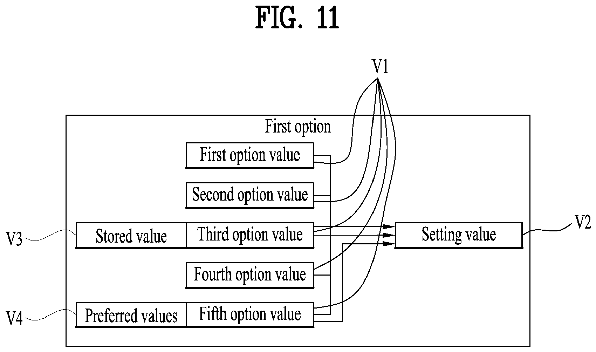

FIG. 11 conceptually shows a setting value V2 reflection process for one option in an embodiment of the present disclosure.

Referring to FIG. 11, in an embodiment of the present disclosure, the controller 90 may perform the course selection process in which one of the plurality of treatment courses C100 is selected as a selected course by the user.

In the course selection process, the setting value V2 of the option for the selected course may be changed by the user. The controller 90 may store, as a preferred value V4, the setting value V2 that the user has repeatedly set for the option of the selected course a certain number of times or more in previous course selection processes, and may reflect the preferred value V4 as the setting value V2 of the option for the selected course during the current course selection process.

In an embodiment of the present disclosure, a function of reflecting the preferred value V4 as the setting value V2 of the option may be defined as a 'preferred value reflection function'. An embodiment of the present disclosure may change the setting value V2 of the option for each of the plurality of treatment courses C100 based on a user's preference, thereby providing the preferred value reflection function that may improve convenience of use.

Specifically, in an embodiment of the present disclosure, each of the plurality of options may have a plurality of option values V1 selectable by the user. For one option, one of the plurality of option values V1 may be determined as the setting value V2 and may be reflected in the process of performing the treatment course C100.

In one example, the controller 90 may store a stored value V3 for each option in advance. The stored value V3 may be one of the plurality of option values V1. When the controller 90 is powered on and the course selection process is performed, the stored value V3 may be provided to the user as the setting value V2 of the option for each treatment course C100.

Referring to FIG. 11, the process of determining the setting value V2 of the option will be described in more detail as follows.

In an embodiment of the present disclosure, when the power is applied, the controller 90 may perform the course selection process, and in the course selection process, the plurality of treatment courses C100 may be displayed in a selectable manner to the user.

The plurality of treatment courses C100 may include a first treatment course C100, and the first treatment course C100 may include a first option. For the first option, a plurality of option values V1 that may be selected by the user, for example, first to fifth option values V1, as shown in FIG. 11, may be preset in the controller 90.

In one example, for the first option of the first treatment course C100, the controller 90 may store the third option value V1 in advance as a stored value V3. Accordingly, in each course selection process, the first treatment course C100 may be displayed to the user with the setting value V2 of the first option determined to be the third option value V1 corresponding to the stored value V3.

However, the user may change the setting value V2 of the first option set by default while the first treatment course C100 is displayed from the third option value V1 to another option value V1.

Additionally, the stored value V3 of the first option may be different for each treatment course C100. For example, regardless of the stored value V3 of the first option being the third option value V1 in the first treatment course C100, the stored value V3 of the first option may be the second option value V1 in the second treatment course C100.

In one example, in an embodiment of the present disclosure, when the preferred value reflection function is applied, the controller 90 may identify and store the preferred value V4 by the user. The preferred value V4 may mean the option value V1 selected by the user more than once for one option in one treatment course C100.

For example, as described above, as an example of an embodiment of the present disclosure, while the first treatment course C100 is displayed to the user in the course selection process, and the third option value V1, which is the stored value V3 of the controller 90 for the first option, is set and displayed as the setting value V2 of the first option, the user may perform the first treatment course C100 by changing the setting value V2 of the first option to an option value V1 other than the third option value V1, for example, the fifth option value V1.

As above, when the first treatment course C100 is performed by repeating the change of the setting value V2 of the first option from the third option value V1 to the fifth option value V1 a certain number of times or more, the controller 90 may store the fifth option value V1 of the option as the preferred value V4 of the user in the first treatment course C100.

When the preferred value V4 exists for the corresponding option, the controller 90 may set the preferred value V4 as the setting value V2 of the corresponding option by prioritizing the preferred value V4 instead of the stored value V3.

For example, when the user proceeds with the first option of the first treatment course C100 with the fifth option value V1 repeatedly a certain number of times or more, the fifth option value V1 may be stored as the preferred value V4, as shown in FIG. 11. After the fifth option value V1 is stored as the preferred value V4, the first treatment course C100 may be displayed on the course selection screen P200 with the setting value V2 of the first option being the fifth option value V1 corresponding to the preferred value V4 rather than the third option value V1 corresponding to the stored value V3.

The preferred value V4 may be set and stored for each of the plurality of options for each of the plurality of treatment courses C100. In an embodiment of the present disclosure, the setting value V2 of the option may be set in advance by considering user convenience and provided via the stored value V3 of each option, and further, when the preferred value V4 preferred by the user is generated, the preferred value V4 may be set as the setting value V2 of the option and be provided to the user, thereby improving the convenience of use.

In one example, in an embodiment of the present disclosure, the controller 90 may reflect the preferred value V4 as the setting value V2 when the preferred value V4 exists for the option of the selected course, and may reflect the stored value V3 stored in advance in the controller 90 as the setting value V2 when the preferred value V4 does not exist.

Additionally, the controller 90 may store the setting value V2, which the user has repeatedly set a certain number of times or more in succession in the previous course selection processes, as the preferred value V4.

For example, when the user performs the laundry treatment process with the same setting value V2 for one treatment course C100 and one option three or more times in succession, the controller 90 may store the corresponding setting value V2 as the preferred value V4. However, the storage of the preferred value V4 may not necessarily correspond to the setting value V2 set in succession, and the number of repetitions may also be variously determined.

In one example, in an embodiment of the present disclosure, the preferred value reflection function that reflects the preferred value V4 as the setting value V2 may be equipped in the cabinet 10 and may be released via the input device 110 or the user's terminal 95 where the user's command is input.

That is, in an embodiment of the present disclosure, the controller 90 may set the preferred value V4 as the setting value V2 of the option when the preferred value reflection function is applied, and may set the store value V3 stored in advance as the setting value V2 of the option when the preferred value reflection function is released.

Although the present disclosure is shown and described in relation to the specific embodiment, it will be obvious to those skilled in the art that the present disclosure may be improved and changed in various ways without departing from the technical spirit of the present disclosure provided by the following patent claims.

## Claims

1. A laundry treating apparatus comprising:
a cabinet;
a drum rotatably disposed inside the cabinet and configured to accommodate laundry therein; and
a controller disposed inside the cabinet and configured to store a plurality of treatment courses for treating the laundry,
wherein the plurality of treatment courses include an existing course preset in the controller, and further include a user course additionally stored in addition to the existing course as a user sets an option.

2. The laundry treating apparatus of claim 1, wherein the user course remains stored as part of the plurality of treatment courses even after the controller is powered off and then powered on again.

3. The laundry treating apparatus of claim 1, wherein the cabinet is equipped with an output device configured to output a screen to the user,
wherein the output device outputs a course selection screen where one of the plurality of treatment courses is selected,
wherein the user course is displayed on the course selection screen as the one of the plurality of treatment courses along with the existing course.

4. The laundry treating apparatus of claim 1, wherein the user course is created to have the option set via an input device disposed on the cabinet or a user's terminal.

5. The laundry treating apparatus of claim 1, wherein an output device disposed on the cabinet and configured to output a screen or a user's terminal outputs a user course setting screen for creating the user course.

6. The laundry treating apparatus of claim 1, wherein the user course is created as a new course distinct from the existing course by changing a setting value of the option from the existing course.

7. The laundry treating apparatus of claim 6, wherein the existing course includes a plurality of existing courses set in the controller,
wherein the user course is created as the new course with the changed setting value of the option by the user from one of the plurality of existing courses selected by the user.

8. The laundry treating apparatus of claim 1, wherein an additional course additionally created by the user in addition to the existing course is stored as part of the plurality of treatment courses in the controller,
wherein the user course corresponds to the additional course.

9. The laundry treating apparatus of claim 8, wherein the additional course is stored in the controller so as to be able to be deleted by the user.

10. The laundry treating apparatus of claim 8, wherein an additional course recommendation screen providing the additional course additionally creatable in the controller is output from an output device disposed in the cabinet and configured to output a screen or a user's terminal,
wherein the controller stores the additional course selected by the user on the additional course recommendation screen as part of the plurality of treatment courses.

11. The laundry treating apparatus of claim 1, wherein the controller performs a course selection process of selecting one of the plurality of treatment courses as a selected course by the user,
wherein in the course selection process, a setting value of the option for the selected course is changeable by the user,
wherein the controller stores a setting value repeatedly set by the user a certain number of times or more for the option of the selected course in past course selection processes as a preferred value, and reflects the preferred value as the setting value of the option for the selected course during a current course selection process.

12. The laundry treating apparatus of claim 11, wherein the controller reflects the preferred value as the setting value when the preferred value exists for the option of the selected course, and reflects a stored value stored in advance in the controller as the setting value when the preferred value does not exist.

13. The laundry treating apparatus of claim 11, wherein the controller stores a setting value repeatedly set by the user in succession a certain number of times or more in the past course selection processes as the preferred value.

14. The laundry treating apparatus of claim 11, wherein a preferred value reflection function of reflecting the preferred value as the setting value is releasable by an input device disposed in the cabinet and configured to allow a user's command to be input or a user's terminal.
